# EUROPEAN PATENT SPECIFICATION

(11) **EP 4 246 097 B1**
(45) Date of publication and mention of the grant of the patent: **09.07.2025**
(21) Application number: 22162259.0
(22) Date of filing: 15.03.2022
(51) Int. Cl.: G01D 5/244, G01D 11/02, F16C 35/077, F16C 41/00, F16C 19/52

(54) **ROTARY ENCODER AND A METHOD FOR DETERMINING MALFUNCTION OF A ROTARY ENCODER**
DREHGEBER UND VERFAHREN ZUR BESTIMMUNG EINER FEHLFUNKTION EINES DREHGEBERS
ENCODEUR ROTATIF ET PROCÉDÉ DE DÉTERMINATION DE DYSFONCTIONNEMENT D'UN ENCODEUR ROTATIF

(43) Date of publication of application: 20.09.2023
(73) Proprietor: Leine & Linde Aktiebolag, 645 21 Strängnäs (SE)
(72) Inventor: GUSTAFSSON, Mats, 645 96 Stallarholmen (SE); LUNDGREN, Martin, 645 34 Strängnäs (SE); JOHANSSON, Robin, 645 33 Strängnäs (SE)
(74) Representative: Zacco Sweden AB

(56) References cited:
- US-A1- 2021 270 644

## Description

### TECHNICAL FIELD

The present invention relates to a rotary encoder comprising a rotor and a shaft having a bearing configuration. The invention further relates to a method for detecting a blocked bearing in the rotary encoder. The invention also relates to a computer program product comprising program code for a computer for implementing a method according to the invention.

### BACKGROUND ART

Rotary encoders are used in industry for position and speed monitoring and are typically mounted on a shaft of a motor or a gearbox of an assembly. Rotary encoders may be equipped with a rotor unit and a stator unit for detecting operational parameters of the shaft of the assembly.

Rotary encoders are assembled with different shafts and bearings. In case bearings of the rotary encoder are blocked or get sluggish, a driving torque on the rotary encoder shaft is increased and may eventually lead to that a connection between the rotary encoder shaft and the shaft of the assembly will break.

US 2021/270644 A1 discloses a rotary encoder bearing failure detection, whereby the rotary encoder comprises bearings enabling relative rotation between a stator, comprising a housing and a detector, and a rotor, comprising a scale, as well as a bushing in between the outer sleeve of the bearings and the housing. The bushing enables some limited rotation if the bearings break or get sluggish and friction forces get above a certain threshold. The rotor and stator are biased toward each other in the axial direction by a spring. Pins are provided, which, in a regular position with no failure are located in a recess, whereby in the case of a failure and corresponding relative rotation of the bushing and bearing outer sleeve, the pins are mechanically removed from their recess and push the stator and rotor away from each other in the axial direction. The encoder scale is pushed accordingly away from the detector, in which case the detector does not detect the scale. The resulting lack of detection signal is a switching trigger for the malfunction alarm.

### OBJECTS OF THE INVENTION

An object of the present disclosure is to provide a rotary encoder, which seeks to mitigate, alleviate, or eliminate one or more of the above-identified deficiencies in the art and disadvantages singly or in any combination.

An object of the present invention is to propose a novel and advantageous method for determining malfunction of a rotary encoder.

Another object of the invention is to propose a novel and advantageous rotary encoder and a novel and advantageous computer program for determining malfunction of a rotary encoder. Another object of the present invention is to propose a novel and advantageous method providing a more reliable and safe operation of a rotary encoder.

Yet another object of the invention is to propose a method, a rotary encoder and a computer program achieving an automated and user-friendly detection of malfunctioning bearings of a rotary encoder.

Yet another object of the invention is to propose an alternative method, an alternative rotary encoder and an alternative computer program for determining malfunction of a rotary encoder.

### SUMMARY

These and other objects, apparent from the following description, are achieved by a rotary encoder according to claim 1. Other objects are achieved with a method according to claim 6.

Advantageous embodiments are depicted in the dependent claims.

Specifically an object of the invention is achieved by a rotary encoder. Said rotary encoder comprises a shaft having a bearing configuration. Said bearing configuration is internally connected to an axial bushing arranged in a housing. The bearing configuration is configured to allow rotation of the shaft relative to said housing. Said rotary encoder comprises a rotor being attached to said shaft. Said rotary encoder also comprises a stator. The rotary encoder further comprises an arrangement configured to determine malfunction of the bearing configuration. Said arrangement comprises a detection device configured to determine whether a connection device is operably connected between a fixed portion of said rotary encoder and said bushing, and to output the status of the connection to a control arrangement. If there is no connection, said detection device is configured to determine a rotation of said bushing associated with malfunction of the bearing configuration. Hereby, malfunction of the bearing configuration may be determined in an efficient and reliable way so that extensive damage associated with malfunctioning of an assembly comprising said rotary encoder may be avoided. Hereby dangerous situations such as break down associated with an assembly comprising said rotary encoder may be efficiently avoided. Hereby safety of an assembly comprising said rotary encoder may be improved.

Advantageously safe and reliable operation of the rotary encoder is provided. Hereby operation of an associated assembly may be interrupted before severe damage or wear of components of the assembly occur. Hereby high standards of operation, involving a small number of unexpected disturbances, may be upheld.

Advantageously the expected service time of the bearing configuration may be substantially upheld due to reduction of risk for continued operation of the rotary encoder having malfunctioning components. This also allows, to a further extent, to make use of data collected by the rotary encoder for statistics purposes.

Advantageously it is possible to with high accuracy determine that malfunction of the bearing configuration is identified as the cause of improper operation of the rotary encoder. According to the invention, said connection device comprises an electrical circuit to which an electrical signal is provided, wherein said fixed portion comprises said stator said electrical circuit being connected between said stator and said bushing wherein said detection device, when determining whether there is a connection, is configured to determine whether there is an electrical signal, wherein malfunction of the bearing configuration is determined if there is no electrical signal. By thus providing such an electrical circuit, determination of whether there is a connection between said stator and said bushing is facilitated so that malfunction of the bearing configuration may be easily and efficiently obtained.

According to the invention, said electrical circuit comprises at least one electrical conductor being connected to said bushing via a contacting member. According to an embodiment of said rotary encoder, said electrical circuit comprises two electrical wires. Hereby connection of said electrical circuit may be easily and efficiently obtained and controlled. According to an embodiment of said rotary encoder, said electrical circuit comprises more than two electrical wires. According to an aspect of the present disclosure, said contacting member is configured to be attached to said bushing. According to an aspect of the present disclosure, said contacting member is configured to be attached to said bushing adjacent to said stator. According to an aspect of the present disclosure, said contacting member comprises a contacting knob.

According to an embodiment of said rotary encoder, said connection device further comprises a flexible support member being arranged to facilitate said connection between said fixed portion and said bushing. By thus providing a flexible support member said connection may be easily and efficiently provided. Such a flexible support member facilitates supporting said electrical circuit. Said flexible support member may be a flexible strip. According to an embodiment of said rotary encoder, said connection device is configured to provide a wireless connection between said fixed portion and said bushing. By thus providing a wireless connection by means of said connection device, easy connection between fixed portion and said bushing may be obtained, as well as easy detection of lost connection. Said wireless connection may be provided by means of emitting light. Said wireless connection may be provided by means of a magnetic connection. Said wireless connection may be provided by means of an inductive connection. Said device configured to provide wireless connection may comprise a light emitting member.

According to an embodiment of said rotary encoder, said arrangement comprises a plate being arranged between said rotor and said bushing, said plate being attached to said housing and being arranged to provide fixation in the axial direction of the shaft towards said bushing. Hereby said connection device may be efficiently fixated in connection to said bushing. According to an aspect of the present disclosure, said plate is configured to be coaxially arranged relative to said shaft. According to an aspect of the present disclosure, said plate is ring-shaped. According to an aspect of the present disclosure, said plate is configured to be attached to said housing by means of screw joint members so as to facilitate providing said fixation in the axial direction of the shaft towards said bushing. According to an aspect of the present disclosure, said plate is configured to be arranged adjacent to said bushing, between said bushing and said rotor. According to an aspect of the present disclosure, said a portion of said support member is configured to be arranged in connection to said plate, between said plate and said busing, so that said plate may apply pressure against said support member towards said bushing for said fixation.

According to an embodiment of said rotary encoder, said arrangement comprises a shear pin fixedly arranged between said bushing and said plate, said shear pin being arranged to break in connection to rotation of said bushing. By thus applying such a shear pin, a certain resistance against rotation against rotation of said bushing may be provided so that loss of connection of said connection device may be easily and efficiently controlled. According to an aspect of the present disclosure, said shear pin is configured to break if the rotational torque exceeds a predetermined threshold value.

According to an embodiment of said rotary encoder, said arrangement, when it is determined that there is no connection, is configured to take action so as to facilitate preventing extensive damage associated with malfunctioning of an assembly comprising said rotary encoder. Hereby an electronic control arrangement of said arrangement is arranged to take said action. By thus taking action, dangerous situations such as break down associated with an assembly comprising said rotary encoder may be efficiently avoided. According to an aspect of the present disclosure, said arrangement, when taking action, is configured to trigger an alarm. According to an aspect of the present disclosure, said electronic control arrangement of said arrangement, when taking action, is configured to shut down operation of said assembly comprising said rotary encoder. According to an aspect of the present disclosure, said arrangement, when taking action, is configured to inform operators of the situation, where said information may be visual and/or audible, and/or tactile.

Specifically an object of the invention is achieved by a method for determining malfunction of a bearing configuration of a rotary encoder, as defined in claim 6.

According to an embodiment of the method, said connection device comprises an electrical circuit to which an electrical signal is provided, wherein said fixed portion comprises said stator said electrical circuit being connected between said stator and said bushing wherein the step of determining whether there is a prevailing operable connection comprises determining whether there is an electrical signal; and determining that there is a rotation of said bushing associated with malfunction of the bearing configuration if there is no electrical signal.

The method for determining malfunction of a bearing configuration of a rotary encoder according to the present disclosure has the advantages according to the corresponding rotary encoder as set out herein.

According to various aspects of the invention, there are provided a computer program product according to claim 8, and a computer-readable storage medium according to claim 9 comprising instructions which, when the program of claim 8 is executed by a computer, cause the computer to carry out any one of the steps of the method of claim 6.

The rotary encoder disclosed herein may be applicable to paper mill systems and rolling mills. The rotary encoder disclosed herein may be applicable to elevator systems, oil rig systems and various machine tools. The rotary encoder may thus be applicable to a great variety of assemblies.

The proposed rotary encoder may be applicable to various assemblies comprising an engine/motor for rotating a shaft. The assembly may be a vehicle such as a mining machine, tractor, dumper, wheel-loader, forest machine, earthmover, road construction vehicle, road planner, emergency vehicle or a tracked vehicle. The proposed rotary encoder is according to one aspect of the disclosure well suited to other applications that comprise a rotary shaft than vehicles, e.g. watercraft. The watercraft may be of any kind, e.g. motorboats, steamers, ferries, ships or submarines.

The rotary encoder disclosed herein is applicable to various stationary assemblies/platforms comprising a rotating shaft, such as a windmill for generating electricity.

According to one example, a number of rotary encoders are provided to the assembly for detecting operational parameters of various components/units/arrangements of the assembly. Said number of rotary encoders may be 2, 3, 4, or larger.

The term "link" refers herein to a communication link, which may be a physical connection such as a multicore cable, an opto-electronic communication line, or a non-physical connection such as a wireless connection, e.g. a radio link or microwave link. The communication may be achieved by transmission of analog and/or digital signals. In case of digital communication the link may be arranged as a digital data interface, in particular as a serial data interface.

The term "(electronic) control arrangement" is according to one embodiment herein defined as an arrangement comprising only one electronic control arrangement or a number of connected electronic control arrangements. Said one electronic control arrangement or said number of connected electronic control arrangements may be arranged to perform the steps according to the method depicted herein.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

A shear pin refers to a mechanical detail designed to break once a predetermined force is applied. Mechanical properties of the shear pin may be chosen based on empirical experience. Hereby any suitable value of the predetermined break threshold value of the shear pin may be chosen.

Further objects, advantages and novel features of the present invention will become apparent to one skilled in the art from the following details, and also by putting the invention into practice.

### BRIEF DESCRIPTION OF THE DRAWINGS

For fuller understanding of embodiments of the present invention and its further objects and advantages, the detailed description set out below should be read in conjunction with the accompanying drawings, in which the same reference numerals denote similar items in the various diagrams, and in which:
Figure 1a schematically illustrates a cross-sectional view of a rotary encoder according to an embodiment of the present disclosure;
Figure 1b schematically illustrates a perspective view of the rotary encoder in Figure 1a according to an embodiment of present disclosure;
Figure 2a schematically illustrates a cross-sectional view of the rotary encoder in Figure 1a according to an embodiment of present disclosure;
Figure 2b schematically illustrates another cross-sectional view of the rotary encoder in Figure 1a according to an embodiment of present disclosure;
Figure 3a schematically illustrates an exploded view of the rotary encoder in Figure 1a according to an embodiment of present disclosure;
Figure 3b schematically illustrates another exploded view of the rotary encoder in Figure 1a according to an embodiment of present disclosure;
Figure 4 is a schematic flowchart of a method according to an embodiment of the invention; and
Figure 5 schematically illustrates a computer according to an embodiment of the invention.

### DETAILED DESCRIPTION

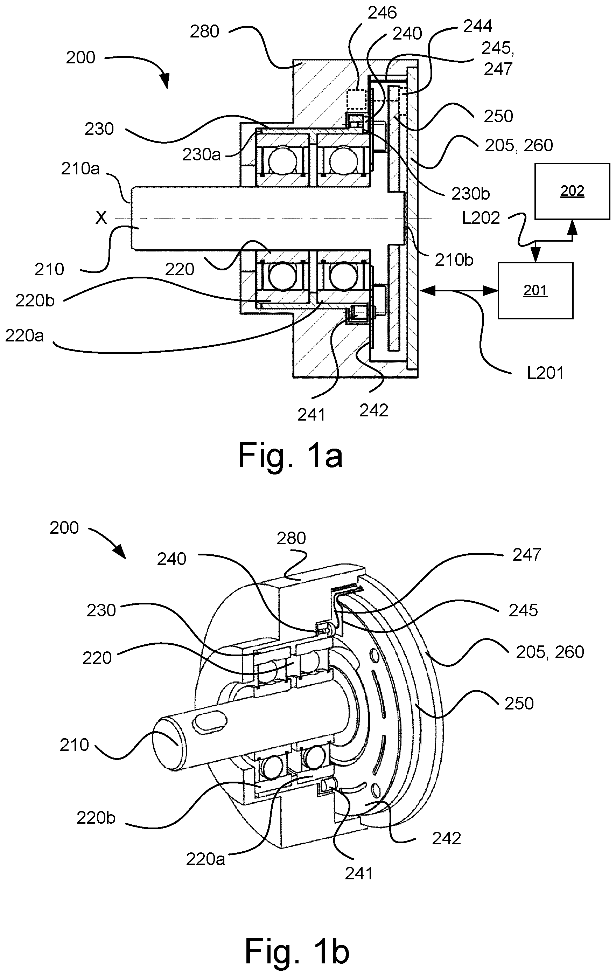

Figs. 1a-b, 2a-b and 3a-b schematically illustrate different views of a rotary encoder 200 according to an embodiment of the present disclosure.

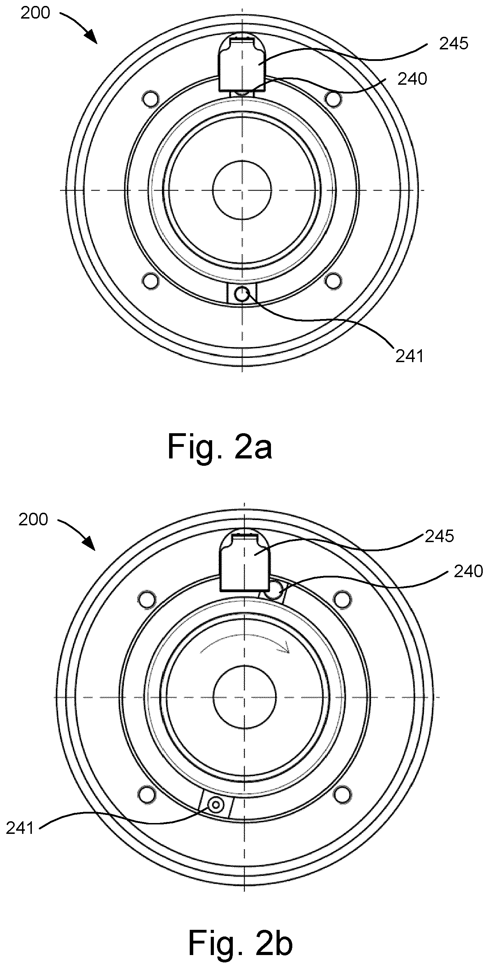

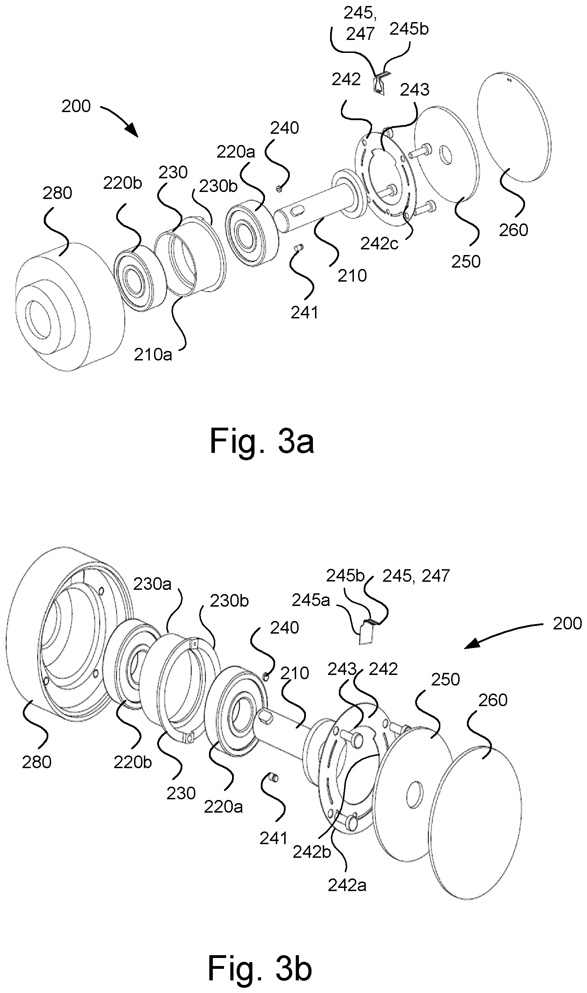

Figure 1a schematically illustrates a cross-sectional view of the rotary encoder 200; Figure 1b a perspective view of the rotary encoder 200; Figure 2a a cross-sectional view of the rotary encoder 200; Figure 2b another cross-sectional view of the rotary encoder 200; Figure 3a an exploded view of the rotary encoder 200; and Figure 3b another exploded view of the rotary encoder 200.

The rotary encoder 200 comprises a shaft 210. The shaft 210 has a first end portion 210a and an opposite second end portion 210b. Said shaft 210 is configured to rotate about an axis X.

The rotary encoder 200 comprises a bearing housing 280. The bearing housing 280 is herein also denoted housing 280. Said housing 280 is arranged to house a bearing configuration 220. The housing 280 may consist of any suitable material, such as a metal or alloy, e.g. aluminium or stainless steel. The housing 280 may consist at least partly of a plastic material. The housing 280 may consist at least partly of a ceramic.

The bearing configuration 220 comprises a first bearing unit 220a. The first bearing unit 220a is arranged to be fixedly arranged to the shaft 210. The first bearing unit 220a may comprise any suitable bearings. The bearing configuration 220 comprises a second bearing unit 220b. The second bearing unit 220b is arranged to be fixedly arranged to the shaft 210. The second bearing unit 220b may comprise any suitable bearings. The bearing configuration 220 is configured to allow rotation of the shaft 210 relative to said housing 280. The rotary encoder may be provided with any suitable bearing units, e.g. plain bearings or roller bearings.

According to an aspect of the present disclosure the first bearing unit 220a and second bearing unit 220b are arranged next to each other around the shaft 210. The first bearing unit 220a and second bearing unit 220b may according to one example be arranged separated by a predetermined distance from each other around the shaft 210. The second bearing unit 220b is arranged closer to the second end portion 210b of the shaft 210 than the first bearing unit 220a.

The respective bearing unit 220a, 220b has an inner ring shaped portion configured to be arranged around and attached to said shaft 210, and an outer ring shaped portion configured to be connected to said housing 280 via a bearing bushing 230. The respective bearing unit 220a, 220b is fixedly attached to said shaft 210 and said bearing bushing 230.

The bearing bushing 230 is arranged around said bearing configuration 220. Said bearing bushing 230 has a ring-shaped configuration. Said bearing bushing 230 is arranged to be closely received within a portion of said housing 280.

The bearing bushing 230 is configured to allow rotation relative to said housing 280 when a rotational force between the bearing bushing 230 and the housing 280 exceeds a predetermined threshold value. The predetermined threshold value is determined so that in a first operational state, when the bearing configuration 220 is operating without any malfunctioning, no rotation of the bearing bushing 230 takes place and in a second operational state, when the bearing configuration 220 is malfunctioning, a rotation of the bearing bushing 230 takes place. The bearing configuration 220 is considered to be malfunctioning when at least one of the bearing units 220a, 220b becomes sluggish or even blocks which leads to an increased rotational force between the inner ring shaped portion and the outer ring shaped portion of the respective bearing unit 220a, 220b when the shaft rotates.

Said bearing bushing 230 has a first end portion 230a arranged to face in the same direction as the first end portion 210a of said shaft 210. Said bearing bushing 230 has a second end portion 230b, opposite to said first end portion 230a, and thus arranged to face in the same direction as the second end portion 210b of said shaft 210.

According to an aspect of the present disclosure, said second end portion 230b of said bearing bushing 230 has a wider outer diameter than the remaining portion of the bearing bushing 230 for facilitating connection at said second end portion 230b.

According to one example there is provided least two bearing units at the shaft 210 for achieving a balanced and low-vibration operation of the rotary encoder 200.

The shaft 210 is configured to be attached to a rotating device of an assembly, such as an assembly exemplified herein. The rotary encoder 200 is arranged to determine values of a set of operational parameters of the shaft 210. The operational parameters may be characteristics of operation of the assembly. According to one example the set of operational parameters may comprise the parameter "prevailing angular position of the shaft 210". According to one example the set of operational parameters may comprise any of the parameters: prevailing angular position of the shaft 210 and rotational speed of the shaft 210.

According to one example the shaft 210 may be connectable to a rotating device of the assembly by any suitable fastening means. This allows a connection in a rotatable fixed manner. According to one example a connection between the shaft 210 and a rotating device of the assembly is performed via a shaft coupling device.

The rotary encoder 200 works by being configured to detect relative rotation of a rotor 250 and a stator 260. The rotor 250 is arranged to be fixedly secured at the shaft 210. Said rotor 250 is arranged to be attached to said shaft 210 in connection to said second end portion 210b of said shaft 210. Said rotor 250 is configured to rotate with said shaft 210.The rotation of the rotor 250 with respect to the stator 260 may be detected using any technology capable of detecting such changes. Examples of such technologies include capacitive, optical, inductive and/or magnetic detection. The rotary encoder 200 may be configured as an incremental and/or an absolute rotary encoder. The terms rotor and stator may refer to single components as well as aggregates serving a common function of rotor or stator.

According to an aspect of the present disclosure, said stator 260 is arranged to be attached to said housing 280 in connection to said second end portion 210b of said shaft 210. Said stator 260 is configured to be fixed relative to said shaft 210 so that said shaft 210 rotates relative to said stator 260. According to an aspect of the present disclosure, said rotor 250 is arranged between said stator 260 and said bearing configuration 220. According to an aspect of the present disclosure, said rotor 250 is arranged between said stator 260 and said bearing bushing 230. The proposed method is applicable to rotary encoders comprising a radial measuring configuration.

The rotor 250 further comprises a first disc having a scale for detection of relative rotation between the rotor 250 and the stator 260. The first disc is mounted at the shaft 210. When the shaft 210 rotates with respect to the stator 260, rotation measurement circuitry at the stator 260 can detect changes in the scale with respect to the rotation measurement circuitry. For instance, the scale may comprise inductive, capacitive and/or magnetic elements configured to cause a corresponding inductive, capacitive or magnetic signal when the first disc is rotated with respect to the stator 260. The scale may be part of an optical rotary encoder wherein the rotary encoder is configured to shine light of a light source 246 (LED, laser diode, etc.) onto a light detector 244 (photodiode) through slits in the first disc. Alternatively, a reflective version of an optical rotation measurement technology for an optical rotary encoder may be used. Alternatively, any suitable components being arranged for detecting operational parameters may be used in the rotary encoder 200. The components are chosen on the basis of the operation parameter detection method of the rotary encoder 200.

The stator 260 comprises a second disc. The second disc comprises measurement apparatus configured to detect relative motion of the first and second discs, e.g. by detecting said inductive, optical, capacitive or magnetic signals. The second disc may be a printed circuit board.

The rotor 250 may be denoted "graduation carrier" or "code disc". The stator 260 may be denoted "detector". According to one example, the stator 260 is not disc-shaped and may be denoted "scanner" or "scanning unit".

A control arrangement 201 is arranged for communication with the rotary encoder 200 via a link L201. According to one embodiment the control arrangement 201 is arranged for communication with the rotation measurement circuitry at the stator 260 via the link L201. Hereby the stator 260 is arranged to send signals comprising information about operational parameters to the control arrangement 201 via the link L201.

The control arrangement 201 is arranged to determine values of the operational parameters and to present determined values of the operational parameters via any suitable presentation means, e.g. presentation means 202, to an operator of the assembly and/or the rotary encoder 200. Alternatively or additionally, the control arrangement 201 is arranged to generate control signals for a motor drive (not shown) within the assembly based on the operational parameters.

According to one embodiment, the rotation measurement circuitry at the stator 260 may be arranged to perform the same functions as the control arrangement 201. Herein detection of operational parameters may be performed by any of the rotation measurement circuitry at the stator 260 and/or the control arrangement 201.

The rotary encoder 200 may further be configured for electromagnetic compatibility scenarios. The bearing housing 280 of the rotary encoder 200 may be arranged to fixate and protect fragile EMC components from vibrations. According to some aspects, the rotary encoder 200 further comprises electrostatic discharge, ESD, shielding arranged to shield the rotary encoder 200 from electrostatic charge and/or discharge. According to some aspects, the rotary encoder 200 further comprises electromagnetic shielding arranged to prevent electromagnetic radiation to and/or from the rotary encoder 200 exceeding a predetermined threshold. According to some aspects, the rotary encoder 200 is configured to function without degradation in the presence of a predetermined electromagnetic disturbance. In other words, according to some aspects, the rotary encoder 200 is configured to be electromagnetically immune to a predetermined radio frequency interference.

According to some aspects, the rotary encoder 200 further may comprise a set of sealing components arranged at the rotary encoder 200. The set of sealing components is arranged to seal the rotary encoder 200 from an environment.

According to some aspects, the rotary encoder 200 comprises a set of spacers. The set of spacers is configured to fix a relative position between two or more components of the rotary encoder 200.

Said rotary encoder 200 comprises an arrangement configured to determine malfunction of the bearing configuration 220

Said arrangement comprises a connection device 245, 247 configured to be operably connected between a fixed portion 260; 280 of said rotary encoder 200 and said bearing bushing 230. The fixed portion of said rotary encoder may comprise said stator 260 and said housing 280.

According to an aspect of the present disclosure, said connection device 245, 247 is configured to be operably connected between said stator 260 and said bushing 230.

According to an aspect of the present disclosure, said connection device 245, 247 comprises an electrical circuit 247 to which an electrical signal is provided. Said electrical circuit 247 is arranged to be connected between said stator 260 and said bushing 230. According to an aspect of the present disclosure, said electrical circuit 247 is arranged to be connected to said stator 260 so as to facilitate providing said electrical signal in said circuit. According to an aspect of the present disclosure, said electrical signal is configured to be provided to said electrical circuit 247 by means of said stator 260.

According to an aspect of the present disclosure, said arrangement of the rotary encoder 200 comprises a contacting member 240 for facilitating connection of said connection member to said bearing bushing 230. According to an aspect of the present disclosure, said contacting member 240 is configured to be attached to said bearing bushing 230. According to an aspect of the present disclosure, said contacting member 240 is configured to be attached to said second end portion 230b of said bearing bushing 230 so that said contacting member 240 is facing in the direction towards said stator 260. According to an aspect of the present disclosure, said contacting member 240 comprises a contacting knob.

According to an aspect of the present disclosure, said electrical circuit 247 is arranged to be connected to said bearing bushing 230 via said contacting member 240. According to an aspect of the present disclosure, said electrical circuit 247 comprises two electrical wires configured to be connected to said bushing 230 via said contacting member 240. In other words said electrical circuit 247 operates like a switch that is closed via said contacting member 240 in the first operational state and that is open in the second operational state.

According to an aspect of the present disclosure, said connection device 245, 247 comprises a flexible support member 245 arranged to facilitate said connection between said stator 260 and said bearing bushing 230. According to an aspect of the present disclosure, said electrical circuit 247 is arranged to be supported by said flexible support member 245. According to an aspect of the present disclosure, said electrical circuit 247 is arranged to be connected to said flexible support member 245.

According to an aspect of the present disclosure, said flexible support member 245 has an L-shaped profile. Hereby reference is also made to Fig. 3a and Fig. 3b. According to an aspect of the present disclosure, said flexible support member 245 has a first plate portion 245a arranged between said second end portion 230b of said bearing bushing 230 and said rotor 250. It is further configured to run from the contacting member 240 outwardly in an essentially orthogonal direction relative to the axial extension of said shaft 210 passed the outer circumference of said rotor 250. According to an aspect of the present disclosure, said flexible support member 245 has a second plate portion 245b configured to provide a transition from the first plate portion 245a and configured to run outside of said outer circumference of said rotor 250 towards said stator 260 to a connection point of said stator 260 for providing connection to said stator 260.

According to an aspect of the present disclosure, said arrangement of the rotary encoder 200 comprises a plate 242 arranged between said rotor 250 and said bearing bushing 230. Said plate 242 is configured to be attached to said housing 280. According to an aspect of the present disclosure, said plate 242 is arranged to provide fixation in the axial direction of the shaft 210 towards said bearing bushing 230.

According to an aspect of the present disclosure, said plate 242 is configured to be coaxially arranged relative to said shaft 210. According to an aspect of the present disclosure, said plate 242 is ring-shaped. Said ring-shaped plate 242 is formed as a disc. Said ring-shaped plate 242 has an outer circumference 242a and an inner circumference 242b, see Fig. 3b. Said ring-shaped plate 242 thus has a central opening configured to be coaxially arranged relative to said shaft 210. Said inner circumference 242b has an arc-shaped recess 243 configured to be arranged in connection to said contacting member 240 connected to said bearing bushing 230. Said arc-shaped recess 243 has an angular extension so as to facilitate rotation in connection to said contacting member 240.

According to an aspect of the present disclosure, said plate 242 has a number of arc-shaped grooves 242c arranged distributed along the plate 242 between said outer circumference 242a and inner circumference 242b, said arc-shaped grooves being through-grooves running through said plate 242. The grooves 242c provide improved resilient characteristics of the plate 242.

According to an aspect of the present disclosure, said plate 242 is configured to be attached to said housing 280 by means of screw joint members so as to facilitate providing said fixation in the axial direction of the shaft 210 towards said bearing bushing 230. According to an aspect of the present disclosure, said plate 242 is configured to be attached to said housing 280 by any suitable means, such as an adhesive. According to an aspect of the present disclosure, said plate 242 is configured to be attached to said housing 280 by any suitable fastener.

According to an aspect of the present disclosure, said plate 242 is configured to be arranged adjacent to said bearing bushing 230, between said bearing bushing 230 and said rotor 250. According to an aspect of the present disclosure, said first plate portion 245a of said support member 245 is configured to be arranged in connection to said plate 242, between said plate 242 and said bearing busing 230, so that said plate 242 may apply pressure against said first plate portion 245a of said support member 245 towards said bearing bushing 230 for said fixation.

According to an aspect of the present disclosure, said arrangement of the rotary encoder 200 comprises a shear pin 241 configured to be fixedly arranged between said bearing bushing 230 and said plate 242. Said shear pin 241 is arranged to break in connection to rotation of said bearing bushing 230. According to an aspect of the present disclosure, said shear pin 241 is configured to be fixedly arranged between said bearing bushing 230 and said plate 242 in connection to said second end portion 230b of said bushing 230. According to an aspect of the present disclosure, said shear pin 241 is configured to be attached between said bearing bushing 230 and said plate 242 so that it breaks if the rotational force exceeds a predetermined threshold value. According to an aspect of the present disclosure, said shear pin 241 is configured to be attached between said bearing bushing 230 and said plate 242 so that it breaks if the torque associated with rotation of said bearing bushing 230 exceeds a predetermined threshold value.

According to an aspect of the present disclosure, any suitable means may be arranged at the rotary encoder 200 so that rotation of the bearing bushing 230 is allowed if the rotational force exceeds a predetermined threshold value. According to an aspect of the present disclosure, any suitable means may be arranged at the rotary encoder 200 so that rotation of the bearing bushing 230 is allowed if the torque associated with rotation of said bearing bushing 230 exceeds a predetermined threshold value.

According to an aspect of the present disclosure, said shear pin 241 is configured to be fixedly arranged between said bearing bushing 230 and said plate 242 at essentially the opposite side of said bearing bushing 230 relative to said connection device 245, 247, in relation to the direction orthogonal to the axial direction. According to an aspect of the present disclosure, said shear pin 241 is configured to be fixedly arranged between said bearing bushing 230 and said plate 242 at essentially the opposite side of said second end portion 230b of said bearing bushing 230 relative to said connection device 245, 247 and hence relative to said contacting member 240.

According to an aspect of the present disclosure, said arrangement of the rotary encoder 200 comprises a detection device 205. Said detection device 205 is configured to determine whether there is a connection of said connection device 245, 247 between said stator 260 and said bushing 230. Said detection device 205 is configured to determine whether said connection device 245, 247 is operably connected between said stator 260 and said bushing 230.

Said detection device 205 is configured to determine a rotation of said bearing bushing 230 associated with malfunction of the bearing configuration 220 if there is no connection.

Said detection device 205, when determining whether there is a connection, is configured to determine whether there is an electrical signal in said electrical circuit 247 of said connection device. Said detection device 205 is configured to determine a rotation of said bearing bushing 230 associated with malfunction of the bearing configuration 220 if there is no electrical signal.

Said detection device 205 is configured to send the status of the bearing configuration 220 (no malfunction/malfunction) to the control arrangement 201 via the link L201.

The circuit of the detection device 205 may be located either on a separate printed circuit board (PCB) or on the PCB of the stator 260.

According to an embodiment of the disclosure the electrical circuit 247 is arranged to enable a normal operation of the rotation measurement circuitry of the stator 260 in the first operational state and to disable the operation of the rotation measurement circuitry of the stator 260 in the second operational state. In a first example this is achieved by switching the electrical circuit 247 in series with a power supply of the stator 260. In another example, provided that optical scanning is used, the electrical circuit 247 is switched in series with a power supply of the light source 246. In both examples the determination of operational parameters is disabled in the second operational state and therefore the signals comprising information about operational parameters sent to the control arrangement 201 via the link L201 become invalid. Thus, the status of the bearing configuration 220 is sent to the control arrangement 201 in the form of valid or invalid operational parameters. In examples like these, where in the second operational state the operation of the rotation measurement circuitry of the stator 260 is disabled, the stator 260 represents the detection device 205.

The control arrangement 201 is arranged for communication with the presentation means 202 via a link L202. Said presentation means 202 may comprise a display for visual presentation to an operator. The presentation means may comprise visual/audio/tactile presentation devices for presenting information about operational status of the rotary encoder 200. In particular the presentation means 202 is arranged to present information to an operator when malfunction of the bearing configuration 220 has been determined according to the disclosure herein.

According to an embodiment of the disclosure the control arrangement 201 is arranged to generate an alarm signal when malfunction of the bearing configuration 220 is at hand. Hereby the control arrangement 201 is arranged to provide the alarm signal to any means, such as the presentation means 202. The alarm signal is provided so as to indicate malfunctioning of the bearing configuration 220 to an operator.

According to an embodiment of the disclosure the control arrangement 201 is arranged to automatically interrupt operation of the assembly connected to rotary encoder 200 when malfunction of the bearing configuration 220 is at hand. According to an embodiment the control arrangement 201 is arranged to automatically interrupt operation of the assembly connected to rotary encoder 200 when malfunction of the bearing configuration 220 has been detected according to the disclosure herein.

According to an embodiment of the disclosure the detection device 205 is arranged to generate and transmit a signal for automatically disconnect an emergency stop circuit when the operational operation is not at hand (malfunctioning of at least one of the bearing units 220a, 220b has been detected). Hereby operation of the assembly may be automatically shut down when malfunction of at least one of the bearing units 220a, 220b is at hand.

Figure 1b schematically illustrates a perspective view of the rotary encoder 200 according to an embodiment of the disclosure. Reference is made to e.g. the disclosure of Fig. 1a.

Figure 2a schematically illustrates a cross-sectional view of the rotary encoder 200. Hereby the operation of the rotary encoder is running in a "normal", functioning, state. This state is referred to as a first operational state. In particular, the bearing configuration 220, comprising the first bearing unit 220a and the second bearing unit 220b, is operating without any malfunctioning. In the first operational state the connection device 245 is operably connected between a fixed portion of said rotary encoder 200 and the bearing bushing 230. During operation of the rotary encoder 200 in the first operational state it is determined that there is an operational connection provided and thus that no rotation of the bearing bushing 230 is at hand, because the rotational force between the bearing bushing 230 and the housing 280 is below the predetermined threshold. In the first operational state there is no detected malfunction of the bearing configuration 220.

Figure 2b schematically illustrates a cross-sectional view of the rotary encoder 200. Hereby the operation of the rotary encoder is running in a "non-normal", malfunctioning, state. This state is referred to as a second operational state. In particular, the bearing configuration 220, comprising the first bearing unit 220a and the second bearing unit 220b, is not operating correctly. In the second state the connection device 245 is not operably connected between a fixed portion of the rotary encoder 200 and the bearing bushing 230. It is noted that the bearing bushing 230 has been rotated clockwise to a certain extent, because the rotational force between the bearing bushing 230 and the housing 280 exceeded the predetermined threshold and that operational connection hereby has been lost. During operation of the rotary encoder 200 in the second operational state it is determined that there is not an operational connection provided and thus that at least some rotation of the bearing bushing 230 is at hand. In the second operational state it is hereby detected that malfunction of the bearing configuration 220 is at hand.

Figure 3a schematically illustrates an exploded view of a rotary encoder according to an embodiment of the invention. Reference is made to e.g. the disclosure related to Fig. 1a.

Figure 3b schematically illustrates an exploded view of a rotary encoder according to an embodiment of the invention. Reference is made to e.g. the disclosure related to Fig. 1a.

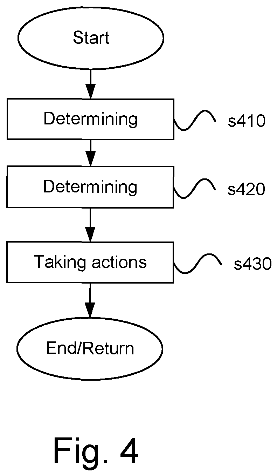

Figure 4 is a schematic flowchart of a method according to an embodiment of the invention. Hereby is provided a method for determining malfunction of a bearing configuration 220 of a rotary encoder 200. The rotary encoder 200 comprises a shaft 210 having said bearing configuration 220. Said bearing configuration 220 is internally connected to an axial bearing bushing 230 arranged in a housing 280. The bearing configuration 220 is configured to allow rotation of the shaft 210 relative to said housing 280. The rotary encoder 200 further comprises a rotor 250 being attached to said shaft 210. The rotary encoder 200 also comprises a stator 260 and an arrangement comprising a detection device 205 configured to determine whether a connection device 245, 247 is operably connected between a fixed portion of said rotary encoder 200 and said bearing bushing 230 and to output the status of the connection to a control arrangement 201. The method comprises the steps of determining (s410) whether there is a prevailing operable connection between said fixed portion of said rotary encoder 200 and said bearing bushing 220 and, if there is no connection, determining (s420) that there is a rotation of said bushing associated with malfunction of the bearing configuration 220.

According to an example said connection device 245, 247 comprises an electrical circuit to which an electrical signal is provided, wherein said fixed portion comprises said stator 260, said electrical circuit being connected between said stator 260 and said bearing bushing 230.

Hereby the step of determining (s410) whether there is a prevailing operable connection comprises determining whether there is an electrical signal. Hereby it is determined that there is a rotation of said bushing 230 associated with malfunction of the bearing configuration 220 if there is no electrical signal.

After the method steps s410 and s420 a method step s430 may be performed.

The method step s430 comprises the step of taking actions.

According to one example the step of taking actions comprises the step of generating an alarm signal when a rotation of said bushing associated with malfunction of the bearing configuration 220 has been determined. Hereby an operator at an early stage may be informed about that the bearing configuration 220 is malfunctioning. Hereby the operator may manually interrupt operation of the encoder 200 and/or operation of an assembly connected to the shaft 210.

According to one example the step of taking actions comprises the step of automatically interrupting operation of the assembly connected to the rotary encoder 200 when a rotation of said bearing bushing 230 associated with malfunction of the bearing configuration 220 has been determined.

According to one example the step of taking actions comprises the step of automatically interrupting operation of the assembly connected to the rotary encoder 200. This may be performed by means of the control arrangement 201 or the detection device 205. According to one example, interrupted operation of the assembly connected to the rotary encoder 200 is performed by switching the power off, thus shutting down the assembly at least partly. This may be performed by means of the control arrangement 201 or the detection device 205.

After the method step s430 the method ends.

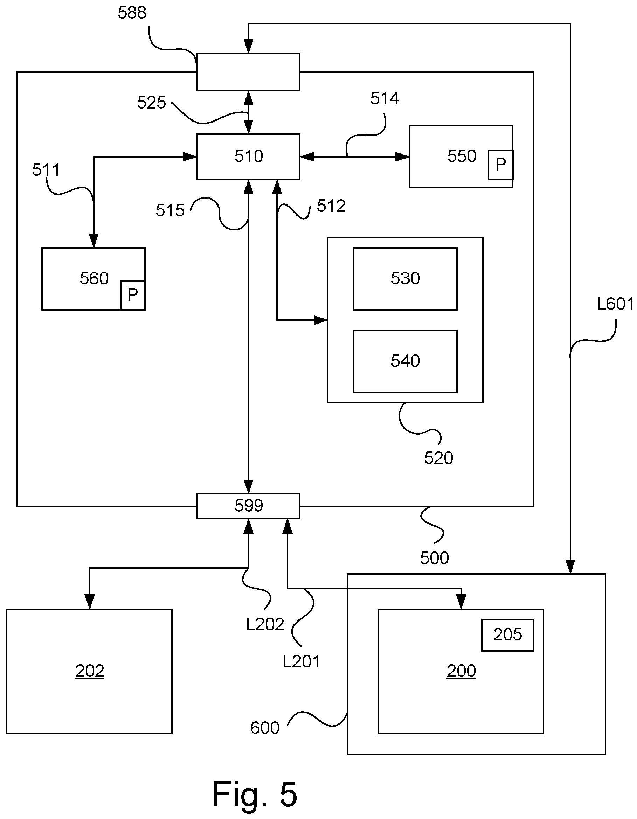

Figure 5 is a diagram of one version of a computer 500. The control arrangement 201 described with reference to e.g. Figure 1a may in one version comprise the computer 500. According to one example the detection device 205 may comprise the computer 500. The computer 500 comprises a non-volatile memory 520, a data processing unit 510 and a read/write memory 550. The non-volatile memory 520 has a first memory element 530 in which a computer program, e.g. an operating system, is stored for controlling the function of the computer 500. The computer 500 further comprises a bus controller, a serial communication port, I/O means, an A/D converter, a time and date input and transfer unit, an event counter and an interruption controller (not depicted). The non-volatile memory 520 has also a second memory element 540.

According to an example embodiment there is provided a computer program P.

The computer program P may comprise routines for generating an alarm signal when the status of the bearing configuration 220 received from the detection device 205 indicates a malfunctioning bearing configuration 220.

The computer program P may comprise routines for automatically interrupting operation of the assembly 600 when the status of the bearing configuration 220 received from the detection device 205 indicates a malfunctioning bearing configuration 220.

The computer program P may comprise routines for performing any one of the method steps detailed with reference to the disclosure.

The program P may be stored in an executable form or in compressed form in a memory 560 and/or in a read/write memory 550.

Where it is stated that the data processing unit 510 performs a certain function, it means that it conducts a certain part of the program which is stored in the memory 560 or a certain part of the program which is stored in the read/write memory 550.

The data processing device 510 can communicate with a data port 599 via a data bus 515 and can control functions of the assembly 600 with a control port 588 via a control bus 525. In particular via the control bus 525 and the control port 588 the processing device 510 can interrupt the operation of the assembly 600 when malfunction of the bearing configuration 220 has been determined. The non-volatile memory 520 is intended for communication with the data processing unit 510 via a data bus 512. The separate memory 560 is intended to communicate with the data processing unit via a data bus 511. The read/write memory 550 is arranged to communicate with the data processing unit 510 via a data bus 514. The links L201 and L202, for example, may be connected to the data port 599 (see Fig. 1a and 5) and a link L601 may connect the control port 588 to the assembly 600.

When data are received on the data port 599, they are stored in the second memory element 540. When input data received have been stored, the data processing unit 510 will be prepared to conduct code execution as described above.

Parts of the methods herein described may be conducted by the computer 500 by means of the data processing unit 510, which runs the computer program P stored in the memory 560 or the read/write memory 550. When the computer 500 runs the computer program P, method steps and process steps herein described are executed.

The relevant method steps depicted herein may be performed by means of e.g. the computer 500. Any suitable processing circuitry may be used for performing the disclosed method steps. The processing circuitry may be arranged in the rotary encoder 200 or externally of the rotary encoder 200, such as at the assembly 600.

The computer program product comprises a computer readable medium such as, for example a universal serial bus (USB) memory, a plug-in card, an embedded drive or a read only memory (ROM). The computer readable medium has stored thereon a computer program comprising program instructions. The computer program is loadable into the processing circuitry comprised in any of the control arrangement 201 or the rotation measurement circuitry of the stator 260. When loaded into the processing circuitry, the computer program may be stored in a memory associated with or comprised in the processing circuitry and executed by a processor. According to some embodiments, the computer program may, when loaded into and run by the processing circuitry, cause execution of method steps illustrated in Figure 4 or otherwise described herein.

According to various examples there are provided a computer program product or a computer-readable storage medium comprising instructions which, when the program is executed by a computer, e.g. the control arrangement 201, cause the computer to carry out any of the method steps depicted herein.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The features of the embodiments described herein may be combined in all possible combinations of methods, apparatus, modules, systems, and computer program products. It should be appreciated that the example embodiments presented herein may be practiced in any combination with each other.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A rotary encoder (200) comprising:
a housing (280),
an axial bushing (230),
a shaft (210) having a bearing configuration (220), said bearing configuration (220) being internally connected to said axial bushing (230) arranged in said housing (280), the bearing configuration (220) being configured to allow rotation of the shaft (210) relative to said housing (280), the bushing (230) being configured to allow rotation relative to said housing (280)
when a rotational force between the bushing (230) and the housing (280) exceeds a predetermined threshold value,
a rotor (250) being attached to said shaft (210),
a fixed portion (260; 280) comprising a stator (260),
an arrangement (245; 247; 205; 241; 242) configured to determine malfunction of the bearing configuration (220),
said arrangement comprising a detection device (205) and a connection device (245, 247), the detection device (205) being configured to determine whether the connection device (245, 247) is operably connected between the fixed portion (260; 280) of said rotary encoder (200) and said bushing (230), and to output the status of the connection to a control arrangement (201) via a link (L201),
whereby if there is no connection, said detection device (205) is configured to determine a rotation of said bushing (230) associated with malfunction of the bearing configuration (220),
**characterized in that**
said connection device (245, 247) comprises an electrical circuit (247) to which an electrical signal is provided,
wherein said fixed portion comprises said stator (260), said electrical circuit (247) being connected between said stator (260) and said bushing (230),
wherein said detection device (205), when determining whether there is a connection, is configured to determine whether there is an electrical signal, wherein malfunction of the bearing configuration (220) is determined if there is no electrical signal,
wherein said electrical circuit comprises at least one electrical conductor being connected to said bushing (230) via a contacting member (240).

2. The rotary encoder according to claim 1, wherein said connection device further comprises a flexible support member (245) being arranged to facilitate said connection between said fixed portion (260; 280) and said bushing (230).

3. The rotary encoder according to any of claims 1-2, wherein said connection device is configured to provide a wireless connection between said fixed portion (260; 280) and said bushing (230).

4. The rotary encoder according to any preceding claims, wherein said arrangement comprises a plate (242) being arranged between said rotor (250) and said bushing (230), said plate being attached to said housing (280) and being arranged to provide fixation in the axial direction of the shaft (210) towards said bushing (230).

5. The rotary encoder according to claim 4, wherein said arrangement comprises a shear pin (241) fixedly arranged between said bushing (230) and said plate (242), said shear pin (241) being arranged to break in connection to rotation of said bushing (230).

6. A method for determining malfunction of a bearing configuration (220) of the rotary encoder (200) according to claim 1, the method comprising the steps of:
determining whether there is a prevailing operable connection between said fixed portion (260; 280) of said rotary encoder (200) and said bushing (230); and
if there is no connection, determining that there is a rotation of said bushing (230) associated with malfunction of the bearing configuration (220).

7. The method according to claim 6, wherein said connection device (247) comprises an electrical circuit (247) to which an electrical signal is provided, wherein said fixed portion comprises said stator (260), said electrical circuit (247) being connected between said stator (260) and said bushing (230), wherein the step of determining whether there is a prevailing operable connection comprises determining whether there is an electrical signal; and determining that there is a rotation of said bushing (230) associated with malfunction of the bearing configuration (220) if there is no electrical signal.

8. A computer program product comprising instructions to cause the arrangement of the device of claim 1 to carry out the steps of claims 6 or 7.

9. A computer-readable storage medium having stored thereon the computer program product of claim 8.

## Patentansprüche

1. Drehgeber (200), umfassend:
ein Gehäuse (280),
eine axiale Buchse (230),
eine Welle (210) mit einer Lagerkonfiguration (220), wobei die Lagerkonfiguration (220) intern mit der axialen Buchse (230) verbunden ist, die in dem Gehäuse (280) angeordnet ist, wobei die Lagerkonfiguration (220) dazu konfiguriert ist, eine Drehung der Welle (210) relativ zu dem Gehäuse (280) zu ermöglichen, wobei die Buchse (230) dazu konfiguriert ist, eine Drehung relativ zu dem Gehäuse (280) zu ermöglichen, wenn eine Drehkraft zwischen der Buchse (230) und dem Gehäuse (280) einen vorbestimmten Schwellenwert überschreitet,
einen Rotor (250), der an der Welle (210) angebracht ist,
einen festen Abschnitt (260; 280), der einen Stator (260) umfasst,
eine Anordnung (245; 247; 205; 241; 242), die dazu konfiguriert ist, eine Fehlfunktion der Lagerkonfiguration (220) zu bestimmen,
wobei die Anordnung eine Detektionsvorrichtung (205) und eine Verbindungsvorrichtung (245, 247) umfasst, wobei die Detektionsvorrichtung (205) dazu konfiguriert ist, zu bestimmen, ob die Verbindungsvorrichtung (245, 247) zwischen dem festen Abschnitt (260; 280) des Drehgebers (200) und der Buchse (230) wirkverbunden ist, und den Status der Verbindung über eine Verknüpfung (L201) an eine Steueranordnung (201) auszugeben, wobei, wenn keine Verbindung vorhanden ist, die Detektionsvorrichtung (205) dazu konfiguriert ist, eine Drehung der Buchse (230) zu bestimmen, die der Fehlfunktion der Lagerkonfiguration (220) zugeordnet ist,
**dadurch gekennzeichnet, dass**
die Verbindungsvorrichtung (245, 247) eine elektrische Schaltung (247) umfasst, der ein elektrisches Signal bereitgestellt wird, wobei der feste Abschnitt den Stator (260) umfasst, wobei die elektrische Schaltung (247) zwischen dem Stator (260) und der Buchse (230) verbunden ist,
wobei die Detektionsvorrichtung (205), wenn bestimmt wird, ob eine Verbindung vorhanden ist, dazu konfiguriert ist, zu bestimmen, ob ein elektrisches Signal vorhanden ist, wobei eine Fehlfunktion der Lagerfunktion (220) bestimmt wird, wenn kein elektrisches Signal vorhanden ist,
wobei die elektrische Schaltung mindestens einen elektrischen Leiter umfasst, der über ein Kontaktelement (240) mit der Buchse (230) verbunden ist.

2. Drehgeber nach Anspruch 1, wobei die Verbindungsvorrichtung ferner ein flexibles Stützelement (245) umfasst, das dazu ausgelegt ist, die Verbindung zwischen dem festen Abschnitt (260; 280) und der Buchse (230) zu erleichtern.

3. Drehgeber nach einem der Ansprüche 1-2, wobei die Verbindungsvorrichtung dazu konfiguriert ist, eine drahtlose Verbindung zwischen dem festen Abschnitt (260; 280) und der Buchse (230) bereitzustellen.

4. Drehgeber nach einem der vorhergehenden Ansprüche, wobei die Anordnung eine Platte (242) umfasst, die zwischen dem Rotor (250) und der Buchse (230) angeordnet ist, wobei die Platte an dem Gehäuse (280) angebracht und dazu ausgelegt ist, eine Befestigung in der axialen Richtung der Welle (210) zu der Buchse (230) bereitzustellen.

5. Drehgeber nach Anspruch 4, wobei die Anordnung einen Scherstift (241) umfasst, der fest zwischen der Buchse (230) und der Platte (242) angeordnet ist, wobei der Scherstift (241) dazu ausgelegt ist, die Verbindung bei Drehung der Buchse (230) zu lösen.

6. Verfahren zum Bestimmen einer Fehlfunktion einer Lagerkonfiguration (220) des Drehgebers (200) nach Anspruch 1, wobei das Verfahren die folgenden Schritte umfasst:
Bestimmen, ob eine vorherrschende Wirkverbindung zwischen dem festen Abschnitt (260; 280) des Drehgebers (200) und der Buchse (230) vorhanden ist; und
wenn keine Verbindung vorhanden ist, Bestimmen, dass eine Drehung der Buchse (230) vorhanden ist, die einer Fehlfunktion der Lagerkonfiguration (220) zugeordnet ist.

7. Verfahren nach Anspruch 6, wobei die Verbindungsvorrichtung (247) eine elektrische Schaltung (247) umfasst, der ein elektrisches Signal bereitgestellt wird, wobei der feste Abschnitt den Stator (260) umfasst, wobei die elektrische Schaltung (247) zwischen dem Stator (260) und der Buchse (230) verbunden ist, wobei der Schritt des Bestimmens, ob eine vorherrschende Wirkverbindung vorhanden ist, Bestimmen, ob ein elektrisches Signal vorhanden ist; und
Bestimmen, dass eine Drehung der Buchse (230) vorhanden ist, die einer Fehlfunktion der Lagerkonfiguration (220) zugeordnet ist, wenn kein elektrisches Signal vorhanden ist, umfasst.

8. Computerprogrammprodukt, umfassend Anweisungen, um zu bewirken, dass die Anordnung der Vorrichtung nach Anspruch 1 die Schritte nach Anspruch 6 oder 7 durchführt.

9. Computerlesbares Speichermedium, auf dem das Computerprogrammprodukt nach Anspruch 8 gespeichert ist.

## Revendications

1. Encodeur rotatif (200) comprenant :
un boîtier (280),
une douille axiale (230),
un arbre (210) comportant une configuration de roulement (220), ladite configuration de roulement (220) étant reliée intérieurement à ladite douille axiale (230) disposée dans ledit boîtier (280), la configuration de roulement (220) étant configurée pour permettre la rotation de l'arbre (210) par rapport audit boîtier (280), la douille (230) étant configurée pour permettre la rotation par rapport audit boîtier (280) lorsqu'une force de rotation entre la douille (230) et le boîtier (280) dépasse un seuil prédéterminé,
un rotor (250) étant fixé audit arbre (210),
une partie fixe (260 ; 280) comprenant un stator (260),
un agencement (245 ; 247 ; 205 ; 241 ; 242) configuré pour déterminer un dysfonctionnement de la configuration de roulement (220),
ledit agencement comprenant un dispositif de détection (205) et un dispositif de connexion (245, 247),le dispositif de détection (205) étant configuré pour déterminer si le dispositif de connexion (245, 247) est connecté de manière fonctionnelle entre la partie fixe (260 ; 280) dudit encodeur rotatif (200) et ladite douille (230), et pour émettre en sortie l'état de la connexion à un agencement de commande (201) via une liaison (L201),moyennant quoi, s'il n'y a pas de connexion, ledit dispositif de détection (205) est configuré pour déterminer une rotation de ladite douille (230) associée à un dysfonctionnement de la configuration du roulement,
**caractérisé en ce que**
ledit dispositif de connexion (245, 247) comprend un circuit électrique (247) auquel est fourni un signal électrique,
dans lequel ladite partie fixe comprend ledit stator (260), ledit circuit électrique (247) étant connecté entre ledit stator (260) et ladite douille (230),
dans lequel ledit dispositif de détection (205), lors de la détermination de l'existence d'une connexion, est configuré pour déterminer s'il existe un signal électrique, dans lequel un dysfonctionnement de la configuration de roulement (220) est déterminé s'il n'y a pas de signal électrique,
dans lequel ledit circuit électrique comprend au moins un conducteur électrique connecté à ladite douille (230) via un élément de contact (240).

2. Encodeur rotatif selon la revendication 1, dans lequel ledit dispositif de connexion comprend en outre un élément de support flexible (245) agencé pour faciliter ladite connexion entre ladite partie fixe (260 ; 280) et ladite douille (230).

3. Encodeur rotatif selon l'une quelconque des revendications 1 à 2, dans lequel ledit dispositif de connexion est configuré pour fournir une connexion sans fil entre ladite partie fixe (260 ; 280) et ladite douille (230).

4. Encodeur rotatif selon l'une quelconque des revendications précédentes, dans lequel ledit agencement comprend une plaque (242) agencée entre ledit rotor (250) et ladite douille (230), ladite plaque étant fixée audit boîtier (280) et étant agencée pour fournir une fixation dans la direction axiale de l'arbre (210) vers ladite douille (230).

5. Encodeur rotatif selon la revendication 4, dans lequel ledit agencement comprend une goupille de cisaillement (241) agencée de manière fixe entre ladite douille (230) et ladite plaque (242), ladite goupille de cisaillement (241) étant agencée pour se rompre en liaison avec la rotation de ladite douille (230).

6. Procédé de détermination d'un dysfonctionnement d'une configuration de roulement (220) de l'encodeur rotatif (200) selon la revendication 1, le procédé comprenant les étapes consistant à :
déterminer s'il existe une connexion fonctionnelle prédominante entre ladite partie fixe (260 ; 280) dudit encodeur rotatif (200) et ladite douille (230) ; et
s'il n'y a pas de connexion, déterminer qu'il y a une rotation de ladite douille (230) associée à un dysfonctionnement de la configuration de roulement (220).

7. Procédé selon la revendication 6, dans lequel ledit dispositif de connexion (247) comprend un circuit électrique (247) auquel un signal électrique est fourni, dans lequel ladite partie fixe comprend ledit stator (260), ledit circuit électrique (247) étant connecté entre ledit stator (260) et ladite douille (230), dans lequel l'étape de détermination de l'existence d'une connexion fonctionnelle comprend la détermination de l'existence d'un signal électrique ; et
la détermination de l'existence d'une rotation de ladite douille (230) associée à un dysfonctionnement de la configuration de roulement (220) s'il n'y a pas de signal électrique.

8. Produit de programme informatique comprenant des instructions pour amener l'agencement du dispositif selon la revendication 1 à mettre en œuvre les étapes selon les revendications 6 ou 7.

9. Support de stockage lisible par ordinateur sur lequel est stocké le produit de programme informatique selon la revendication 8.
